Europäisches Patentamt

European Patent Office

Office européen des brevets

(11) Publication number: **0 267 331**
**A1**

# EUROPEAN PATENT APPLICATION

(21) Application number: 86308718.5

(22) Date of filing: 10.11.86

(51) Int. Cl.4: **G09F 13/22** , H05B 33/00 , //B60Q1/30

(43) Date of publication of application:
18.05.88 Bulletin 88/20

(84) Designated Contracting States:
DE ES FR GB IT SE

(71) Applicant: **DONNELLY CORPORATION**
**414 East Fortieth Street**
**Holland Michigan 49423(US)**

(72) Inventor: **Murphy, Michael D.**
**629 Connesstoga Lane**
**Lansdale Pennsylvania 19446(US)**

(74) Representative: **Robinson, Anthony John**
**Metcalf et al**
**Kilburn & Strode 30 John Street**
**London, WC1N 2DD(GB)**

(54) Illuminated panel assembly.

(57) An illuminated decorative panel assembly (10; 60; 100) for example for vehicles, comprises a design (38,98,132) contained within a laminated, transparent assembly. Illumination of the design is by means of an electroluminescent lighting assembly, laminated behind the design, the electrical connections to which are via transparent coatings (16a,16b; 72a,72b; 110,112) on the inner surface of at least one of the exterior glass sheets (12,14; 62,64; 102,104) so that the illuminated design appears to "float" within a transparent region without any visible opaque electrical connections being visible.

Fig. 6

## ILLUMINATED PANEL ASSEMBLY

This invention relates to decorative panel assemblies for, for example, vehicles such as automobiles and trucks, boats, and aircraft, as well as for other appliances, wherein the panel assembly includes indicia, insignia or designs which are illuminated for display purposes.

In recent years, varying efforts have been made to provide illuminated decorative displays especially for use in vehicles including automobiles, trucks, boats and aircraft, as well as in other applications such as appliance doors, store displays, and the like. Such displays have included various arrangements such as mirror plates having illuminated indicia or designs therebehind, edge lighted transparent sheets with letters or other indicia etched or carved into the surfaces for illumination, and numerous types of illuminated instrument panel displays using electroluminescent layers of one type or another. Electroluminescent panels typically include a layer of electroluminescent phosphor or phosphor mixed with some type of dielectric material sandwiched between electrically conductive coatings or layers which are connected to appropriate power sources. This entire assembly is usually applied in stages to a transparent or other supporting substrate and illuminated by the connection of an appropriate power source to the conducting layers such that light is emitted through or away from the substrate. In some cases, one of the electrically conductive layers is configured in the desired design such that the electroluminescent layer provides light only in the areas of the configured electrode.

More recently, efforts have been made to apply electroluminescent technology to the display of automobile insignia and other designs in passenger cars and other vehicles. At least one prior art assembly has included a solid metal symbol or insignia of a predetermined design behind which was placed a relatively planar electroluminescent assembly or pad of a large thickness. Wire leads were connected directly to the electroluminescent pad. This assembly suffered from several drawbacks however.

First, it was difficult to secure to the exterior of the vehicle and yet protect it from the elements to which an automobile is exposed in normal use. Moreover, the power supply required by the assembly created significant radio interference within the automobile and, thus, of necessity, was required to be placed at as great a distance from the radio as possible to reduce such interference as much as possible. Of course, this severely limited the positions in which the insignia could be displayed on the vehicle.

Further, prior known electroluminescent pad assemblies were of significant thickness, i.e., in the range of 0.060 to 0.090 inches (l.5 to 2.3 mm). Such thickness required special mounting arrangements for the assemblies and virtually eliminated any possibility of laminating the electroluminescent assemblies within panel displays such as window assemblies or other areas where positioning and attachment to vehicles would be made easier.

In addition to the above problems, the required electrical connections to prior known assemblies were typically bulky or obtrusive and prevented many aesthetically pleasing displays of the type desired for vehicle applications. Electrical connections typically included highly visible solid metallic conductors leading to light sources or electroluminescent pad assemblies. Of necessity, such conductors usually had to be led directly to the back or sides of a display and required significant masking to make the entire assembly visually pleasing. Accordingly, indicia or design displays could not be positioned in the centre of large transparent areas or in the middle of other panel displays without unsightly conductors being included which would detract from the appearance of the assembly.

Therefore, the need was apparent for a lighted indicia, insignia or design display assembly which would be sufficiently small to enable incorporation in laminated panel assemblies for vehicles such as laminated windows or the like, and yet which would eliminate unsightly electrical conductors which previously had prevented use of illuminated displays in many applications. The present invention was devised as a solution to these and other problems.

The present invention provides a panel assembly for displaying illuminated indicia, insignia or designs especially adapted for use in vehicles such as automobiles, trucks, boats and aircraft or in appliances, signs or the like. The invention is especially useful where display is desired of an insignia, indicia or design in a transparent field such as within a window assembly. The invention provides a complete panel assembly including transparent areas adapted to allow visibility of desired indicia or designs and either full illumination or backlighting of such indicia or designs. The panel assemblies may be incorporated in various supports such as in conventionally known window frames or units. The indicia or designs appear to "float" within the transparent area of the assembly since there are no visible electrical conductors present or leading to or from the illuminated indicia or design.

In one form of the invention, a panel assembly for displaying illuminated indicia, insignia or designs is provided having a pair of sheet-like panels at least one of which includes a transparent area. Lamination means are provided intermediate the panels for bonding the panels together. The lamination means are transparent, at least after lamination; they preferably comprise or include a sheet of polyvinyl buturate. A transparent, electrically conductive coating means is applied on one inwardly facing surface of at least one of the panels. In addition, an electroluminescent lighting means for illuminating an area of the assembly when an electrical voltage is applied thereto is included. The lighting means is formed in a desired configuration between the panels such that it is in registry with the transparent area of the one panel and has a surface contacting the transparent, electrically conductive coating means. A metallic layer is included intermediate the lighting means and the one panel and covering at least a portion of the lighting means such that it is visible through the transparent area of the one panel. Conducting means are positioned away from the lighting means for conducting electricity to the electrically conductive coating. In such assembly, the panels and lamination layer form a laminated assembly which supports and positions the lighting means so that, when the conducting means are connected to an electrical source, they are illuminated without any electrically conductive means being visible adjacent or around the lighting means.

In other embodiments of the invention, the metallic layer may be either a partially reflective, light transmitting metallic film or an opaque metal element which partially outlines or partially or completely covers the electroluminescent lighting means. In the latter assembly, a second resinous plastic laminating layer may be included between the metal symbol and one of the panels to help position and properly retain the symbol and lighting means. Preferably, the metallic coating has a light transmission of about 8 percent and a reflectivity of about 92 percent.

A further embodiment of the invention may include a thin object positioned between the lighting means and one of the panels, the object being formed in a desired configuration and covering at least a portion of the lighting means. The object may be formed of metal, high temperature resistant resinous plastic, or other materials and may be opaque, translucent or tinted in a desired colour.

In another embodiment of the invention, transparent electrically conductive coatings are included on the inside surfaces of both panels while the electroluminescent lighting means itself includes electrical connections which convey electrical energy from one transparent, electrically conductive coating to the other.

In yet other embodiments of the invention, mutually insulated backing electrodes are provided on the lighting assembly in contact with mutually insulated transparent electrically conductive coating areas on only one panel such that electric current flows through the transparent coating to and from only the back of the electroluminescent light assembly to further reduce any visible connections.

In further preferred embodiments, the panels may be either transparent glass sheets or sheets of other material such as high temperature resistant plastic. In addition, one of the panels may be translucent or opaque.

According to a first aspect of the present invention, a panel assembly for displaying illuminated indicia, insignia or designs is characterised by first and second sheet-like panels, the first panel including a transparent area therein; an at least partially, substantially transparent laminate between the panels; a substantially transparent electrically conductive coating on an inner surface of at least one of the panels; electroluminescent lighting means for illuminating an area of the assembly when an electrical voltage is applied thereto, the lighting means being positioned between the panels behind the transparent area of the first panel, and having a first surface contacting the electically conductive coating; a metallic layer intermediate the lighting means and the first panel and covering at least a portion of the lighting means so that the metallic layer is visible through the transparent area of the first panel; conducting means positioned away from the lighting means for conducting electricity to the electrically conductive coating whereby the panels and the laminate form a laminated assembly with the lighting means therein such that when the conducting means are connected to an electrical source, the lighting means are illuminated without any opaque electrically conductive means being visible adjacent or around the lighting means.

According to a second aspect of the present invention, a panel assembly for displaying illuminated indicia, insignia or designs is characterised by first and second sheet-like panels, the first panel including a transparent area therein; an at least partially transparent laminate between the panels; a pair of mutually insulated, substantially transparent electrically conductive coated areas on an inner surface of at least one of the panels; electroluminescent lighting means for illuminating an area of the assembly when electrical voltage is applied thereto, the lighting means being positioned between the panels behind the transparent area of the first panel, and including a pair of mutually insulated backing electrodes on a first surface of the lighting means; the lighting means engaging the coated areas such that each backing electrode contacts a different one of the coated areas; conducting means positioned away from the lighting means for conducting electricity to the electrically conductive coated areas whereby when the conducting means are connected to an electrical source, the lighting means are illuminated without any opaque electrically conductive means being visible adjacent or around the lighting means.

According to a third aspect of the present invention, a panel assembly for displaying illuminated indicia, insignia or designs is characterised by first and second sheet-like panels, the first panel including a transparent area therein; an at least partially substanially transparent laminate between the panels; each panel having a substantially transparent, electrically conductive coating on its inner surface; electroluminescent lighting means for illuminating an area of the assembly when electrical voltage is applied thereto, the lighting means being positioned between the panels behind the transparent area of the first panel and including a light transmitting, flexible, plastics film coated with a second substantially transparent electrically conductive coating which is in turn coated with a layer of electroluminescent material; a metallic backing electrode under the electroluminescent material and contacting the transparent electrically conductive coating on the second panel; a partially reflective, light transmitting metallic film on a surface of the plastics film opposite the second electrically conductive coating, the metallic film having at least one portion engaging the second electrically conductive coating; conducting means positioned away from the lighting means for conducting electricity to the electrically conductive coatings on panels whereby when the conducting means are connected to an electrical source, the lighting means are illuminated without any opaque electrically conductive means being visible adjacent or around the lighting means; and the panels and laminate together forming a laminated assembly with the lighting means therein.

According to a fourth aspect of the present invention, a panel assembly for displaying illuminated indicia, insignia or designs is characterised by first and second sheet-like panels, the first panel including a transparent area therein; an at least partially substantially transparent laminate between the panels; a pair of mutually insulated, substantially transparent, electrically conductive coated areas on an inner surface of at least one of the panels; electroluminescent lighting means for illuminating an area of the assembly when an electrical voltage is applied thereto, the lighting means being positioned between the panels behind the transparent area of the first panel, and having a first surface carrying a pair of mutually insulated backing electrodes each contacting a different one of the electrically conductive coated areas; an indicia, insignia or design positioned intermediate the lighting means and the first panel and covering at least a portion of the lighting means such that the indicia, insignia or design is visible through the transparent area; conducting means positioned away from the lighting means for conducting electricity to the electrically conductive coated areas whereby the panels and the laminate together form a laminated assembly which supports and positions the lighting means and the indicia, insignia or design such that when the conducting means are connected to an electrical source, the lighting means are illuminated without any opaque electrical conductors being visible adjacent or around the lighting means.

Accordingly, the present invention allows the lamination of insignia, indicia or designs within a typical laminated window assembly or panel assembly for vehicles and the illumination of such design through the use of at least one transparent electrically conductive coating which eliminates all visible electrical connections adjacent or around the designs in such assemblies. The invention allows inclusion of such insignia or designs without delamination or other separation problems occurring. The designs may be displayed in transparent fields or against opaque or translucent backgrounds. Moreover, electrical interference with radio reception is kept to a minimum through the use of appropriate transformers and other power sources located immediately adjacent window assemblies or other panel assemblies in which the present invention is incorporated. Therefore, the present invention provides a low cost, highly reliable, substantially shock proof, illuminated panel assembly which is both aesthetically pleasing and highly adaptable to location in various positions in a vehicle or appliance.

The invention may be carried into practice in various ways, and three specific panel assemblies embodying the invention will now be described, by way of example, with reference to the drawings, in which:

Figure I is a fragmentary, perspective view of a panel assembly embodying the present invention incorporated in the rear window post of an automobile;

Figure 2 is a front perspective view of a typical panel assembly embodying the present invention;

Figure 2a is a front view of a portion of a modified panel assembly including an insignia or design purposely offset to produce brighter illumination areas;

Figure 3 is a side sectional view of the panel assembly of Figure 2;

Figure 4 is a rear perspective view of the panel assembly of Figures 2 and 3;

Figure 5 is an exploded, fragmentary view of a portion of the panel assembly of Figures 2-4;

Figure 6 is an enlarged, fragmentary, sectional view of one portion of the panel assembly of Figures 2-5 taken along plane VI-VI of Figure 2;

Figure 6a is an enlarged, fragmentary sectional view of one portion of a modified panel assembly wherein the electroluminescent lighting assembly is applied directly to a panel member;

Figure 7 is a front elevation of a second embodiment of the present invention;

Figure 8 is a perspective, exploded view of the panel assembly of Figure 7;

Figure 9 is a sectional, side elevation of the panel assembly of Figures 7 and 8 taken along plane IX-IX of Figure 7;

Figure 10 is a fragmentary, enlarged, sectional view of the panel assembly of Figures 7-9 taken along plane X-X of Figure 7;

Figure 11 is a front perspective view of a third embodiment of the panel assembly of the present invention;

Figure 12 is a front perspective view of the panel assembly of Figure 11 taken from a different angle;

Figure 13 is a side elevation of the panel assembly of Figures 11 and 12;

Figure 14 is a rear perspective view of the panel assembly of Figures 11-13;

Figure 15 is a fragmentary, exploded, perspective view of a portion of the panel assembly of Figures 11-14; and

Figure 16 is an enlarged, fragmentary, sectional view of the panel assembly of Figures 11-15 taken along plane XVI-XVI of Figure 12.

The cross-sectional views shown in the diagrams are not to scale.

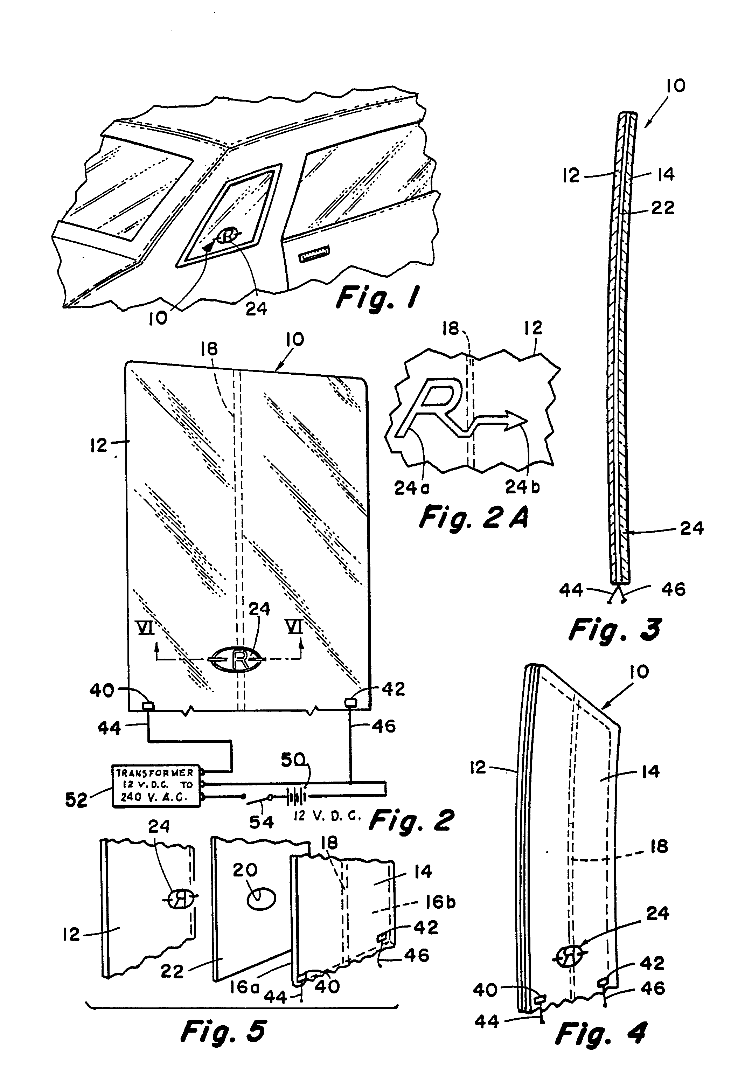

Referring now to the drawings in greater detail, Figures 1-6 illustrate a first embodiment 10 of the decorative panel assembly of the present invention adapted for displaying illuminated indicia, insignia or other designs such that the designs appear to "float" within a transparent area without any visible means of electrical connection. The invention provides high visibility, high definition display of desired insignia especially for decorative purposes on vehicles, appliances or in other places and may be easily manufactured and incorporated into known assemblies for attachment and support. For example, as shown in Figure 1, the present invention may comprise a panel assembly incorporated in a modular-type window assembly secured in the rear roof support post on a conventional automobile, truck or the like. The insignia or design incorporated in the assembly is visible during daylight as a normal decoration on the automobile but is illuminated at night for vehicle identification or other purposes in a position which would not produce undesirable glare or undesired light in the eyes of the driver of the vehicle or other vehicles. Moreover, the assembly requires no extra space and therefore does not disrupt normal styling lines or aerodynamic features of the automobile.

As shown in Figures 2-6, the panel assembly 10 includes a pair of substantially rigid, thin, flat, sheet-like panel members or pieces 12, 14 forming the exterior surfaces of a laminated assembly and between which is sandwiched at least one lamination layer 22. Preferably, one of the panel members, usually that designed to face the exterior of the vehicle, appliance or other application in which the assembly will ultimately be mounted, includes a transparent area or portion. The back or rear panel 14 may be transparent or may be translucent or opaque. In assembly 10, panels 12 and 14 are formed from transparent glass sheets which are formed with a slight curvature as shown in Figure 3 to correspond to the contour of the vehicle in which they are to be mounted. The lamination layer 22 is preferably formed from a sheet of flexible, resinous polymeric material such as polyvinyl butyral which, although translucent before lamination under heat and pressure, is generally transparent thereafter. As will be more fully explained hereinafter, the glass sheets 12, 14 are bonded together with the polyvinyl butyral sheet through the application of heat and pressure such as in an auto-clave or with other methods which are conventionally known in the safety glass industry. The glass sheets 12, 14 preferably each have a thickness of approximately 0.090 inches (2.3 mm), although thicknesses within the range of 0.060 to 0.125 inches (1.5 to 3.2 mm) could also be used. The panel members may be formed from plastic or other materials as long as one of the members includes a transparent area and may have a range of thicknesses. The lamination layer 22 typically has a thickness of about 0.015 (0.38 mm) inches prior to compression in lamination, and a thickness about 0.010 inches (0.25 mm) after lamination. Multiple layers of lamination material can also be used.

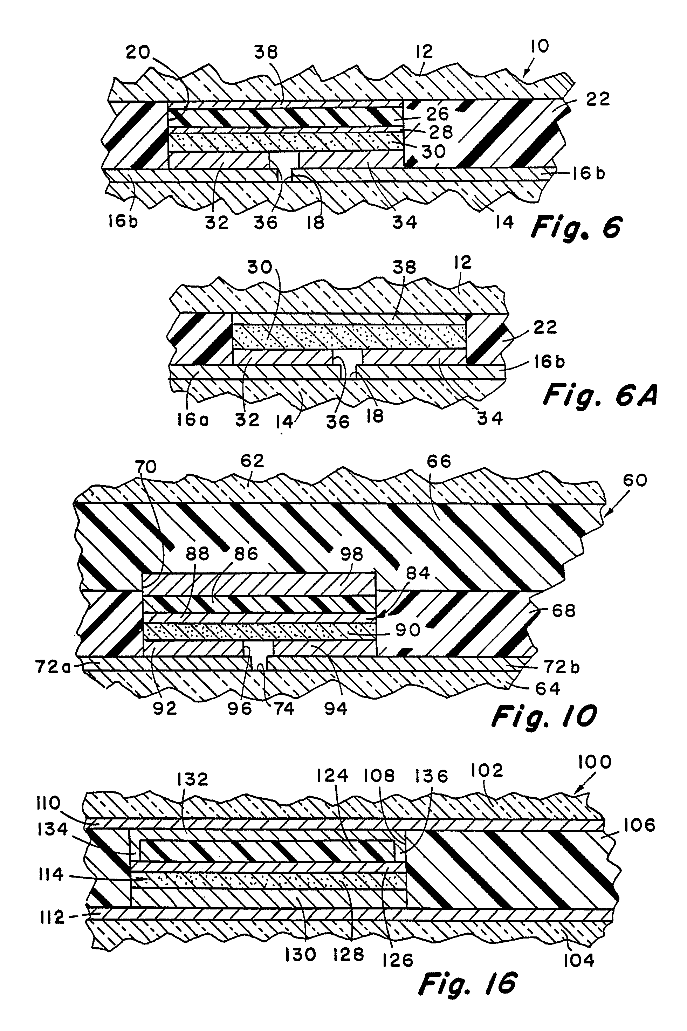

Prior to lamination, the rear panel member 14 is coated with a pair of electrically separated, mutually insulated, transparent, electrically conductive coating areas 16a, 16b each having a thickness of between 250 and 500 Angstroms (25 to 50 nm), preferably 280 Angstroms (28 nm), and an electrical resistivity within the range of approximately 100 to 300 ohms per square. Preferably, these coatings will be formed as fully oxidized, nonreduced, indium tin oxide films which exhibit substantially achromatic color when viewed under normal working or leisure conditions. However, reduced coatings could also be used. In addition, the film coatings are resistant to solvent interaction, etching, adhesion, abrasion and humidity in accordance with General Specification Sheets PD5002 to PD5005 entitled "SPECIFICATIONS FOR DMI DISPLAY CONDUCTIVE COATINGS" by Donnelly Corporation of Holland, Michigan. These coatings can be changed as desired to modify light transmission, resistivity and colour. As seen in Figures 2 and 4-6, the coatings l6a, l6b are separated by a deletion or dielectric area formed by an uncoated strip or line l8 running longitudinally from top to bottom along the centre of the rear panel l4. The deletion or dielectric line or strip l8 is substantially invisible except upon extremely close examination. In addition, as is best seen in Figure 6, the conductive coatings l6a, l6b are applied to the inner surface of the rear panel l4 and face inwardly in the laminated assembly.

As is also seen in Figures 2, 4 and 5, the insignia, indicia or design 24 is received in a correspondingly shaped cutout 20 in the lamination layer 22. The cutout 20 outlines the exterior shape of the insignia or design 24 and allows the overall thickness of the assembly l0 to remain the same as the combined thicknesses after lamination of the glass panels l2, l4 and the polyvinyl butyral lamination layer 22. In addition, the cutout 20 helps to locate and retain the design or insignia 24 in its proper position in registry with and for viewing through the transparent area of the front panel l2 and in proper position for electrical contact with the separate transparent electrically conductive coating areas l6a, l6b as is more fully described hereinafter.

The insignia, indicia or design 24 is formed as a relatively flexible, bendable electroluminescent lighting assembly or pad best seen in Figure 6. The lighting assembly or pad 24 is a composite of several layers and provides a thin, solid state, substantially shock proof, luminescent light source when an electrical voltage is applied across it. In the preferred embodiment the assembly or pad 24 includes a base or support layer 26 of thin polyester film which is also light transmitting or, at least, translucent to light incident thereon. One such film is 'MYLAR' (trademark) produced by E.I. DuPont de Nemours and Co. of Wilmington, Delaware, U.S.A. On the rear side of the layer 26 is formed another transparent, electrically conductive coating 28 such as from indium tin oxide or another conductive coating material. Over the conductive coating 28 is applied a layer 30 of electroluminescent phosphor material of any one of several conventionally known types. One such phosphor material will produce a bluish-green colour when energized. Other materials such as zinc sulfide-zinc oxide with suitable activators such as copper, manganese, lead or silver dispersed in an organic polymeric matrix such as cyanoethyl cellulose can also be used. Colour will vary with the particular phosphor material chosen. Alternately, the layer 30 may comprise two separate layers, one of a phosphor layer immediately adjacent the conductive layer 28 followed by a suitable dielectric layer. Over the electroluminescent phosphor layer 30 are applied a pair of backing electrodes 32, 34 preferably formed from a thin layer of metallic material such as nickel, although other metallic materials could also be used. The backing electrodes 32, 34 are also separated by a deletion or dielectric area 36 comprising an uncoated line or strip extending longitudinally from top to bottom across the entire back of the indicia, insignia or design 24 and adapted to be aligned with the deletion line l8 in the conductive layer l6 on the rear panel member l4. The deletion line l8 preferably has a width of 0.0l0 to 0.050 inches (0.25 to 0.l3 mm) while deletion line 36 is somewhat wider and in the range of about 0.025 to 0.l00 inches (0.6 to 2.5 mm).

One suitable electroluminescent lighting assembly including layers and coatings 26, 28 30, 32 and 34 is that commercially available from Timex Corporation of Waterbury, Connecticut, U.S.A. under the designation Electroluminescent Lighting System. Overall, the combined layers 26 to 34 are formed in a manner consistent with and similar to the electroluminescent device disclosed in US-A-2928974. In this document, an electroluminescent device is disclosed wherein an even number of backing electrodes are separately connected to electrical conductors such that the device emits light when energized even though a transparent, electrically conductive coating within the composite is not directly connected to an electrical source but, rather, is energized with an electric potential across a phosphor layer.

As seen in Figure 6, between the base or support layer 26 and the inside surface of front glass panel l2 is a metallic layer 38 which, in the assembly l0, is preferably formed from a thin, partially reflective, light transmitting metallic film which may be sputtered or otherwise applied to the polymeric support surface. preferably the layer 38 has a preferred light transmission of approximately 8 to l5% for light incident thereon, and a reflectivity of approximately 85 to 92% of incident light. One suitable metallic material for use in the sputter coating layer 38 has been found to be 304 stainless steel of conventionally known composition. In the assembly l0, the thin, metallic layer 38 is applied over the entire surface of the electroluminescent lighting assembly 24, although the assembly 24 itself is stamped or otherwise formed in an insignia or shape as desired and may include cutouts, relieved areas, or the like therein.

Alternately, the layers 32, 34, 30, 28, 26 and 38 could be deposited and built up layer by layer in a conventionally known manner on a resinous polymeric, paper or other transfer sheet which is removed after the insignia 24 is cut or configured from the layers on the transfer sheet and deposited or positioned at the desired location on the panel l2 or the coated panel l4.

Another alternative is to paint on or mechanically deposit the various layers of the lighting assembly directly onto the panel l2 in the desired configuration and position to using conventionally-known masking or other deposition techniques. As shown in Figure 6a, it is also possible in such case to delete and eliminate the support layer 26 and the conductive coating 28 since direct deposit on one of panels l2 or l4 would provide the necessary support and the metallic layer 38 would substitute in function for the conductive coating 28. This provides an even thinner overall laminated panel assembly.

When electrical voltage is applied through the conductive coatings l6a, l6b to illuminate the phosphor layer 30, light is emitted through the transparent electrically conductive coating 28, the support layer 26, and the thin metallic coating 38 such that the insignia or design 24 is visible through the front glass sheet l2 at night or in other periods of low ambient light. In order to conduct electricity to the transparent conductive coatings l6a, l6b, appropriate conductors are adhered or otherwise secured to the edge or outermost areas of the coatings l6a, l6b at some distance from the design or insignia 24 so as to be inconspicuous and/or in such a position as to be covered by a frame which supports or secures the panel in a vehicle, appliance or the like. The conductors 40, 42 are preferably small spots, squares, rectangles or other geometric shapes of electrically conductive silver paint which are silk-screened on in desired locations and fired to properly adhere them to the surface of the conductive coatings l6a and l6b as shown in Figures 2, 4 and 5. Appropriate solid or braided lead wires 44, 46 or other conductors are soldered to the conductive paint spots and connected to a power source as explained more fully hereinafter. Preferably, the solder used to adhere the wires 44, 46 to the conductors 40, 42 is a standard, rosin-core solder composition having a high temperature resistance which melts above approximately 300° F (149°C) so as to resist the heat of lamination when the panels l2 and l4 are combined with the lamination layer l8 under heat and pressure as described above. A preferred silver paint for the conductors 40, 42 is conductor composition number 77l3 available from E.I. DuPont de Numours and Co. of Wilmington, Delaware, U.S.A.

As shown in Figure 2, the wires 44, 46 are connected to an appropriate power source 50 through a switch 54 and transformer 52. A power source 50 may include a conventional l2-volt direct-current voltage source such as a battery typically found in an automobile, truck or other vehicle. Preferably, the transformer 52 is isolated, serves only the particular panel assembly in question, and converts the l2-volt direct current electricity to 240 volts alternating current which in turn is connected to the panel assembly l0. Of course, the transformer may be eliminated if an alternating current power source is available such as with a household appliance. As described in US-A-2928974, such alternating current voltage is applied across the deletion or dielectric strip l8 and the separated conductive areas l6a, l6b as well as across dielectric or deletion strip 36 and separate backing electrodes 32, 34 to apply the appropriate electrical voltage to the phosphor layer 30 such that a current path from the backing electrode 32 through the phosphor layer 30 along the conductive layer 28 and back through the phosphor layer 30 and the backing electrode 34 is created. This, in effect, forms two electric lamps which are connected in series and have equal brightness as long as the surface area of the backing electrodes 32, 34 is maintained substantially equal on either side of deletion area 36. Alternately, a reduced amount of power consumption can be obtained by using a low duty-cycle, pulsed, high frequency potential or power source as described in US-A-4253097. In any event, it is preferred that the transformer 52 be positioned as close as possible to the panel assembly l0 and that separate transformers be used for each different panel assembly. This minimizes electrical interference created by the alternating current power source.

Alternately, as shown in Figure 2a, the surface area of the electroluminescent assembly on either side of the deletion line l8 may be purposely modified such that the backing electrodes 32, 34 have unequal surface areas. Thus, as shown in Figure 2a, it may be desired in one application or another to provide a brighter portion in an insignia such as a portion 24a comprising an "R" and a dimmer portion 24b comprising an arrow, on opposite sides of the deletion line l8. In such case, the larger surface area of the portion 24a would create a brighter insignia "R" than the brightness of the arrow portion 24b on the opposite side of the deletion line l8. Of course, other designs or configurations for the insignia 24 may be devised having brighter or dimmer portions depending on the surface areas placed on either side of the deletion line l8.

To manufacture the assembly l0, an appropriately shaped and curved piece of sheet glass or another substantially rigid rear back panel l4 is coated with appropriately positioned mutually insulated, transparent, electrically conductive coating areas l6a, l6b separated by the deletion strip or line

18. The lamination layer 22 is positioned over the coating area 16a, 16b such that the cutout 20 is centered over the deletion line 18. This causes the deletion or dielectric strip 36 of the composite lighting assembly 24 to be appropriately positioned over the deletion line 18 as shown in Figure 6. Thereafter, the front transparent glass panel or other panel 12 including a transparent area is positioned over the lamination layer 22 and the design 24 such that the transparent area is in registry with the design. The entire assembly is then laminated with appropriate amounts of heat and pressure (as is conventionally known) to securely bond the panels 12, 14 together with the lamination layer 22 which, although translucent before lamination, becomes transparent after lamination. The insignia or design 24 is, thus, permanently located or positioned such that the deletion strips or lines 18 and 36 are in registry and the design or insignia is visible through the transparent area through the front glass or other panel 12. In addition, the backing electrodes 32, 34 are permanently positioned such that the surface area of each is substantially equivalent thereby providing uniform brightness and intensity across the entire lamp, or alternately, are purposely offset or positioned to provide unequal surface areas on either side of the deletion line 18 for unequal brightness as desired in the insignia. At night or in low ambient light conditions, when power is applied through the source 50, the transformer 52, and the conductors 40, 42, an electrical voltage is created in the design 24. The light is visible through the thin metallic layer 38 immediately behind the front glass panel 12. In normal daylight conditions, the partially reflective metallic coating 38 will reflect a portion of the ambient light such that the design or insignia 24 stands out and is visible without illumination. In either case, the insignia or design 24 appears to "float" in the transparent area without any visible electrical connection thereto.

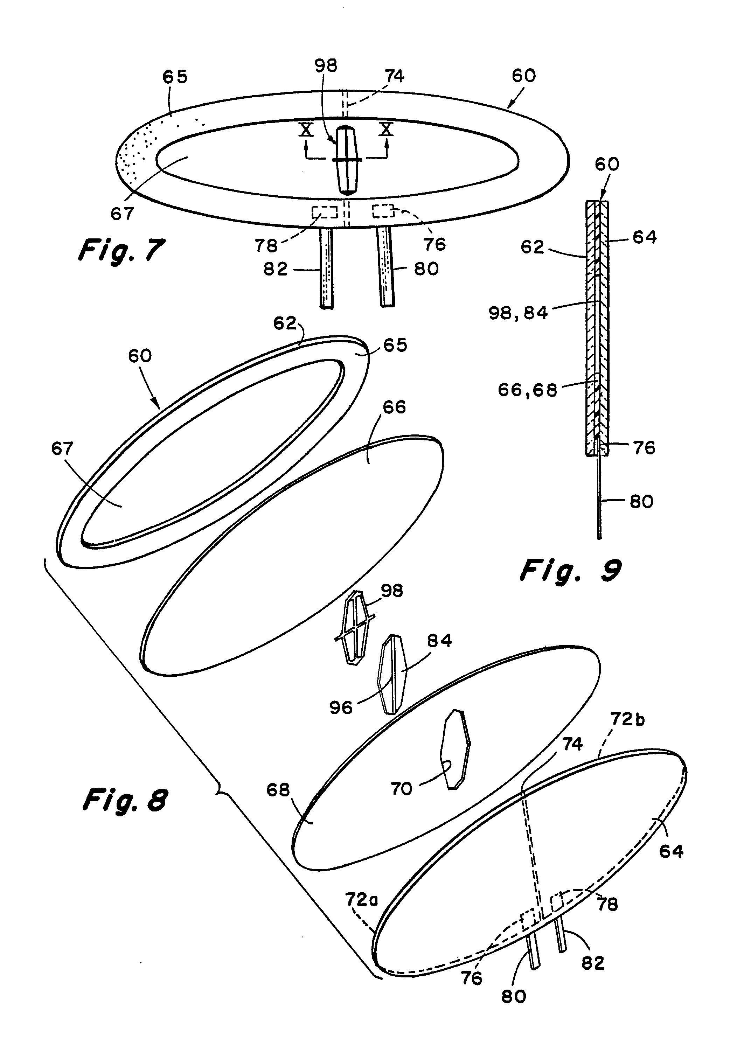

Referring now to Figures 7-10, a second embodiment 60 of the panel assembly is illustrated. The embodiment 60 is similar to the embodiment 10 in that it includes a composite electroluminescent lighting assembly or pad 84 having separate, mutually-insulated backing electrodes thereon engaging mutually-insulated, separate conductive coatings 92, 94 on the inside surface of a rear panel member 64 which are separated by a deletion line 74 as well. The electroluminescent assembly 84, however, essentially backlights or illuminates an object or symbol 98 which covers only a part of the front surface of the electroluminescent lighting assembly. Generally, the compositions and thicknesses of the various panels, layers, coatings and films in assembly 60 are the same as in the assembly 10.

The panel assembly 60 includes a pair of substantially rigid, oval-shaped sheet glass panels 62, 64 forming the front and rear sides of the assembly, respectively. The front panel 62 has a marginal band of black ceramic frit 65 fired on its inside surface to form an opaque band bordering a smaller eliptical or oval transparent area 67 inside the band 65. The rear panel 64 is entirely transparent, although it could be translucent or opaque.

Sandwiched between the panel 62, 64 are a pair of oval lamination layers 66, 68 cut from the sheet polyvinyl butyral as in the assembly 10. The front lamination layer 66 is continuous, while the rear lamination layer 68 includes a cutout 70 having the shape of the metal symbol or design 98 and the electroluminescent lighting assembly 84 which will be received between the panels 62, 64 in the final assembly.

As in the panel 10, the rear panel 64 of the panel assembly 60 includes a pair of electrically-separate transparent electrically conductive coatings 72a and 72b separated by the dielectric or deletion line 74. Electrical energy is supplied to the coatings 72a, 72b by silver paint spot conductors 76, 78 (Figures 7 and 8) which, in turn, have electrical leads 80, 82 soldered thereto in the same manner as in the panel assembly 10. Received within the cutout 70 prior to assembly are the electroluminescent lighting assembly or pad 84 and the metal element 98. The lighting assembly 84 is cut in a designated outline or configuration to match the element 98 which is positioned in front of the assembly 84 between that assembly and the lamination layer 66. When assembled, the element 98 is at least partially embedded in the lamination layer 66 for positioning and retention purposes. As in the assembly 10, the lighting assembly 84 includes four layers including a base or support layer 86 formed from thin polyester film which is relatively flexible, a thin transparent electrically conductive coating 88 on the layer 86 and formed from a material such as indium tin oxide, a phosphor layer 90 and a pair of electrically separated, backing electrodes 92, 94 of substantially equivalent surface area and insulated from one another by a deletion or dielectric strip or line 96. Preferably, the backing electrodes 92, 94, as in the panel assembly 10, are formed from a thin metallic layer of nickel or the like having excellent electrical conductivity.

When assembled, the symbol or design 98, if formed from metal, will reflect light in sufficiently high ambient light conditions. The electroluminescent pad 84 is positioned with its deletion line 96 in registry with the deletion line 74 on the back panel 64 between the conductive coatings 72a, 72b. When the assembly 60 is laminated under heat and pressure as with the assembly 10, the metallic

symbol 98 is thus permanently positioned through contact with the second lamination layer 66 while the electroluminescent pad assembly is positioned within the cutout 70 in the layer 68. When electrical energy is applied through the electrical leads 80, 82 and the conductors 76, 78 to the conductive coatings 72a, 72b, electric current and, thus, a potential is applied to the backing electrodes 92, 94 across the phosphor layer 90 to and from the transparent electrically conductive coating 88 to cause the lighting assembly 84 to emit light and to backlight the opaque metal symbol or element 98 (which is visible in the smaller oval area 67 of the front panel 62). The element 98 appears to "float" within the transparent area 67 without any visible electrical connections thereto.

Alternately, the object 98 may be formed from high temperature resistant plastic or resinous material or some other material and may be translucent, tinted or colored, or opaque. If translucent, at least a portion of the light from pad 84 will shine through the element 98 as in the embodiment 10. It is only necessary that the element 98 be able to withstand the heat of lamination of the assembly 60 such that it will not deform or lose its configuration during assembly.

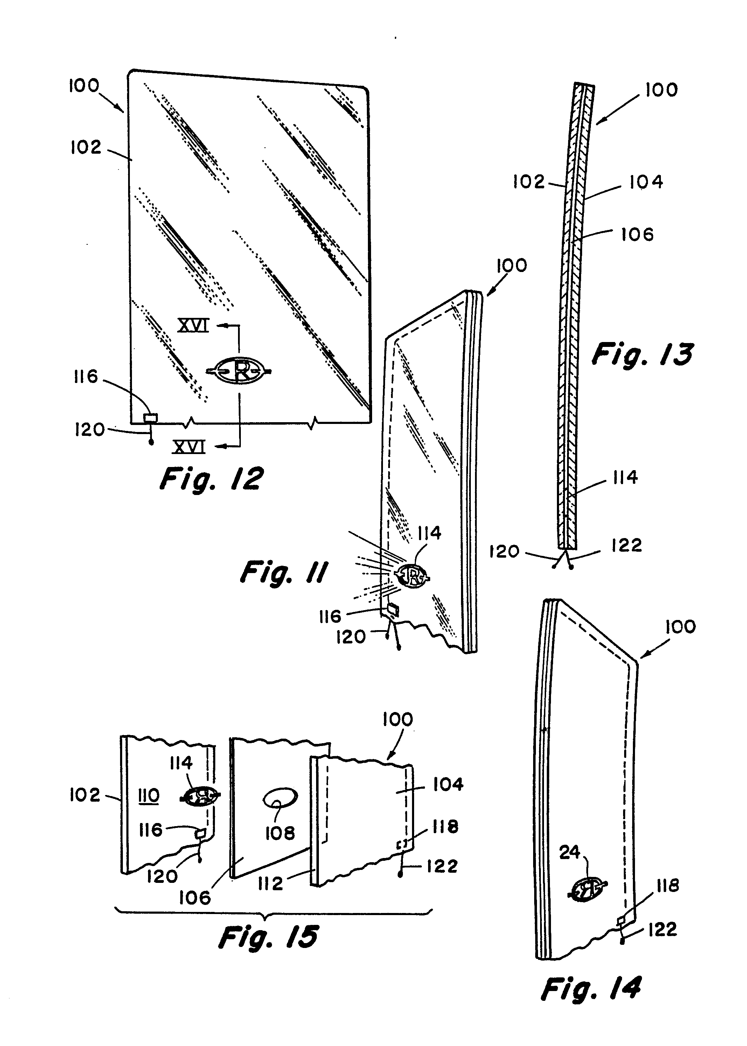

A third embodiment 100 of the panel assembly is shown in Figures 11-16. While the panel assembly 100 is similar in shape and appearance to the panel assembly 10, the manner of supplying electrical energy across the composite electroluminescent light assembly 114 forming the symbol or design is different. Transparent electrically-conductive coatings 110 and 112 are included, respectively, on the inside surfaces of front and rear glass panels 102, 104 of the assembly. The compositions and thicknesses of the various panels, layers, coatings and films in the assembly 100 are the same as in the assemblies 10 and 60.

More specifically, as shown in Figures 12-15, the panel assembly 100 includes front and rear, transparent, glass panels 102,104 sandwiching a single lamination layer 106 of polyvinyl butyral as in the panel 10. The lamination layer 106 includes a contoured cutout 108 corresponding to and receiving an insignia, indicia or design 114 in the ultimate panel assembly. Each panel 102, 104 carries the continuous transparent electrically conductive coating 110,112 respectively covering its entire inside surface. Fired on at an inconspicuous lower corner of each panel 102, 104 are silver spot conductors 116, 118, respectively, having soldered thereto wire or other conductors 120,122, respectively, for connection of the coatings 110, 112 to a power source.

The design 114 is formed from a composite electroluminescent lighting assembly or pad 114 as in the panels 10 and 60 but having a somewhat different configuration internally. Like the design 24 in the panel 10, the assembly 114 includes a base or support layer of thin polyester film 124 such as Mylar film, a transparent electrically conductive coating 126 applied thereover, followed by a phosphor layer 128 and a continuous backing electrode of nickel or other metallic film 130 which is in contact with the rear transparent electrically conductive coating 112 on the panel 104. On the opposite side of the lighting assembly 114 from the backing electrode 130, however, is applied a thin partially-reflective, light-transmitting metallic coating or film 132 of stainless steel or other material. The coating 132 has electrical connecting portions 134, 136 extending transversely of the lighting assembly or pad 114 across the backing layer 124 into contact with at least one, and preferably two portions of the transparent electrically conductive coating 126. The electrical contact portions 134, 136 are at the extreme edges of the pad and are abutted by the lamination layer 106 and the sides of the cutout 108 therein. Accordingly, when power is applied through the leads 120,122 and the connectors 116, 118, an electrical potential is applied through the metallic coating 132 and electrical connecting portions 134, 136 to the conductive coating 126 and, thence, across the phosphor layer 128 through the backing electrode 130 to the conductive coating 112 on the back panel 104. This causes the lighting assembly 114 to emit light which is visible through the coating 126, the film 124 and the thin metallic coating 132 as well as the coating 110 and the front glass panel 102. In the embodiment 100 there is no deletion or dielectric line in the transparent electrically conductive coating layers 110, 112 which is visible even on close inspection. However, as in the other embodiments, the indicia, insignia or design 114 appears to "float" within a transparent assembly without any visible electrical connections.

In each case, the panel assemblies 10, 60 and 100 may be secured or attached in a vehicle, appliance, sign, store display or other application in any onvenient manner, it being desirable to include an appropriate cover or framing to hide the electrical connectors 40, 42, 76, 78 or 116, 118 such that no electrical connections of any kind are visible when the design or insignia is viewed through the transparent area of the panel assembly. As with the assembly 10, the panel assemblies 60 and 100 can utilize individual transformers 52 adjacent the assemblies as powered from a single DC power source or battery such as the battery 50. Appropriate methods for securing the assemblies 10, 60 or 100 as window assemblies in vehicles are shown in our patents US-A-4072340, US-A-4139234, US-A-4364214 and US-A4364595.

As will also be apparent to those skilled in the art, appropriate variations in the panel assemblies 10, 60 and 100 may be made within the scope of the invention. Thus, the front and rear panel members may be formed from materials other than glass such as high temperature resisant plastic or other materials. Moreover, such panels need not be totally transparent. In fact, the rear panel itself can be translucent or opaque or covered with a fired ceramic frit which prevents the passage of light through the rear panel. In addition more than two laminations of substantially rigid panels can be used. For instance, if three or more panels were used, designs could be incorporated which would appear to be at different depths when viewed through the transparent area of the front panel. In addition, the backing electrodes could be replaced by reflective metallic thin film layers or coated over or atop the reflective layers such that when both panels of the assemblies 10,60 and 100 were transparent, and sufficiently high light levels were present, the design, insignia or symbol would reflet light from both sides and be visible from either side of the assembly. Also, use of the present invention is not limited only to vehicles and appliances such as oven doors or the like, but may be also incorporated in signs, store displays or the like where appropriate power can be supplied and where "floating" decorative symbols without any visible electrical connections are desired.

**Claims**

1. A panel assembly (10; 60; 100) for displaying illuminated indicia, insignia or designs characterised by first and second sheet-like panels (12,14; 62,64; 102,104), the first panel including a transparent area therein; an at least partially, substantially transparent laminate (22; 66,68; 106) between the panels; a substantially transparent electrically conductive coating (16a,16b; 72a,72b; 110,112) on an inner surface of at least one of the panels; electroluminescent lighting means for illuminating an area of the assembly when an electrical voltage is applied thereto, the lighting means being positioned between the panels behind the transparent area of the first panel, and having a first surface contacting the electrically conductive coating; a metallic layer (28,38; 88,98; 126,132) intermediate the lighting means and the first panel (12,62,102) and covering at least a portion of the lighting means so that the metallic layer is visible through the transparent area of the first panel; conducting means (40,44,42,46; 78,82,76,80; 116,120,118,122) positioned away from the lighting means for conducting electricity to the electrically conductive coating (16a,16b; 72a,72b; 110,112) whereby the panels (12,14; 62,64; 102,104) and the laminate (22; 66,68; 106) form a laminated assembly with the lighting means therein such that when the conducting means are connected to an electrical source, the lighting means are illuminated without any opaque electrically conductive means being visible adjacent or around the lighting means.

2. A panel assembly as claimed in Claim 1 in which the electrically conductive coating (16a,16b; 72a,72b) is on the second panel (14,64) and includes a pair of mutually-insulated coated areas; the first surface of the lighting means carrying a pair of mutually-insulated backing electrodes (32,34; 92,94); each backing electrode contacting a different one of the coated areas.

3. A panel assembly as clained in Claim 1 or Claim 2 in which the metallic layer is an opaque metal element (98) which is back-lit by the lighting means when the lighting means are illuminated.

4. A panel assembly as claimed in Claim 1 or Claim 2 in which the metallic layer is a partially reflective, light transmitting metallic film (38,132) on a second surface of the lighting means opposite the first surface, the metallic film contacting the first panel (12,102) and the metallic film reflecting ambient light passing through the transparent area of the first one panel but transmitting light from the lighting means therethrough and being visible through the transparent area when the lighting means are illuminated.

5. A panel assembly as claimed in any one of the preceding claims when dependent upon Claim 2 in which the lighting means is a separate laminated assembly positioned between the panels (12,14; 62,64; 102,104) prior to assembly of the entire panel assembly (10; 60; 100) and having a light transmitting, flexible, plastics film (26,86,124) coated with a substantially transparent second electrically conductive coating (28,88,126) which is in turn coated with a layer of electroluminescent material (30,90,128); the backing electrodes (32,34;92,94) including metallic layers applied over the electroluminescent material with a dielectric region (36,96) separating the backing electrodes.

6. A panel assembly as claimed in any one of the preceding claims in which the lighting means is deposited directly on one of the panel members prior to lamination of the panel assembly.

7. A panel assembly (10; 60; 100) for displaying illuminated indicia, insignia or designs characterised by first and second sheet-like panels (12,14; 62,64; 102,104), the first panel including a transparent area therein; an at least partially transparent laminate (22; 66,68; 106) between the panels; a pair of mutually insulated, substantially transparent electrically conductive coated areas (16a,16b; 72a,72b) on an inner surface of at least one of the panels;

electroluminescent lighting means for illuminating an area of the assembly when electrical voltage is applied thereto, the lighting means being positioned between the panels behind the transparent area of the first panel, and including a pair of mutually insulated backing electrodes (32,34; 92,94) on a first surface of the lighting means; the lighting means engaging the coated areas such that each backing electrode contacts a different one of the coated areas; conducting means (40,44,42,46; 78,82,76,80; 116,120,118,122) positioned away from the lighting means for conducting electricity to the electrically conductive coated areas (16a,16b; 72a,72b) whereby when the conducting means are connected to an electrical source, the lighting means are illuminated without any opaque electrically conductive means being visible adjacent or around the lighting means.

8. A panel assembly as claimed in Claim 7 including a partially reflective, light transmitting metallic layer (38; 88; 126; 132) on a second surface of the lighting means adapted to reflect light through the transparent area of the first panel member (12,62,102).

9. A panel assembly as claimed in Claim 7 or Claim 8 including a separate indicia, insignia or design element (98) positioned between the lighting means and the first panel (12,62,102), the element being visible within the transparent area.

10. A panel assembly as claimed in Claim 9 in which the separate element (98) is opaque and only partially covers the lighting means, the element being back-lit by the lighting means.

11. A panel assembly as claimed in Claim 10 in which the laminate includes a pair of polymeric layers (66,68) applied one over the other; at least one of the layers (66) being intermediate the opaque element (98) and the first panel (62); and the other of the said layers (68) having a cutout area (70) generally corresponding in shape to the lighting means, the lighting means being received in the cutout area.

12. A panel assembly as claimed in any one of claims 7 to 11 in which the lighting means is a separate laminated assembly positioned between the panels (12,14; 62,64; 102,104) prior to assembly of the entire panel assembly (10; 60; 100) and having a light transmitting, flexible, plastics film (26,86,124) coated with a substantially transparent second electrically conductive coating (28,88,126) which is in turn coated with a layer of electroluminescent material (30,90,128); the backing electrodes (32,34; 92,94) including metallic layers applied over the electroluminescent material with a dielectric region (36,96) separating the metallic layers.

13. A panel assembly as claimed in any one of claims 7 to 12 in which the backing electrodes (32,34; 92,94) are partially reflective, light transmitting metallic coatings.

14. A panel assembly as claimed in any one of Claims 7 to 13 in which the lighting means is a light-transmitting polyester film (26,86,124) having a coating of indium-tin oxide (28,88,126) thereon covered with a phosphor material (30,90,128)); the backing electrodes being thin layers of nickel.

15. A panel assembly as claimed in any one of claims 7 to 14 in which the backing electrodes (32,34; 92,94) are separated by a dielectric strip (36,96); the substantially transparent electrically conductive coated areas (16a,16b; 72a,72b) being separated by an uncoated strip (18,74), the dielectric strip being generally aligned with the uncoated strip.

16. A panel assembly as claimed in any one of Claims 7 to 15 in which the surface areas of the two backing electrodes (32,34; 92,94) are substantially equivalent.

17. A panel assembly as claimed in any one of Claims 7 to 15 in which the surface areas of the two backing electrodes (32,34; 92,94) are unequal, the electrode with the greater surface area thereby producing a brighter illumination when connected to an electrical source.

18. A panel assembly as claimed in any one of Claims 7 to 17 in which the electrically conductive coated areas (16a,16b; 72a,72b) are on second panel (14,64).

19. A panel assembly (100) for displaying illuminated indicia, insignia or designs characterised by first and second sheet-like panels, (102,104) the first panel (102) including a transparent area therein; an at least partially substanially transparent laminate (106) between the panels; each panel having a substantially transparent, electrically conductive coating (110,112) on its inner surface; electroluminescent lighting means for illuminating an area of the assembly when electrical voltage is applied thereto, the lighting means being positioned between the panels behind the transparent area of the first panel (102) and including a light transmitting, flexible, plastics film (124) coated with a second substantially transparent electrically conductive coating (126) which is in turn coated with a layer of electroluminescent material (128); a metallic backing electrode (130) under the electroluminescent material and contacting the transparent electrically condutive coating (112) on the second panel (104); a partially reflective, light transmitting metallic film (132) on a surface of the plastics film (124) opposite the second electrically conductive coating (126), the metallic film (132) having at least one portion engaging the second electrically conductive coating (126); conducting means (78,82,76,80) positioned away from the lighting means for conducting electricity to the electrically conductive coatings (110,112) on the panels (102,104) whereby when the conducting means are connected to an electrical source, the lighting means are illuminated without any opaque electrically conductive means being visible adjacent or around the lighting means; and the panels and laminate together forming a laminated assembly with the lighting means therein.

20. A panel assembly as claimed in Claim l9 in which the backing electrode (l30) is a partially reflective, light transmitting metallic coating, and the partially reflective, light transmitting metallic film (l32) is a layer of a stainless steel.

2l. A panel assembly as claimed in Claim l9 or Claim 20 in which the metallic film (l32) includes at least two portions extending along two respective edges of the flexible plastics film (l24) into contact with the second electrically conductive coating (l26).

22. A panel assembly for displaying illuminated indicia, insignia or designs characterised by first and second sheet-like panels (62,64), the first panel (62) including a transparent area therein; an at least partially substantially transparent laminate (66,68) between the panels; a pair of mutually insulated, substantially transparent, electrically conductive coated areas (72a,72b) on an inner surface of at least one of the panels; electroluminescent lighting means for illuminating an area of the assembly when an electrical voltage is applied thereto, the lighting means being positioned between the panels behind the transparent area of the first panel, and having a first surface carrying a pair of mutually insulated backing electrodes (92,94) each contacting a different one of the electrically conductive coated areas (72a,72b); an indicia, insignia or design (98) positioned intermediate the lighting means and the first panel (62) and covering at least a portion of the lighting means such that the indicia, insignia or design is visible through the transparent area; conducting means (78,82,76,80) positioned away from the lighting means for conducting electricity to the electrically conductive coated areas (72a,72b) whereby the panels (62,64) and the laminate (66,68) together form a laminated assembly which supports and positions the lighting means and the indicia, insignia or design (98) such that when the conducting means are connected to an electrical source, the lighting means are illuminated without any opaque electrical conductors being visible adjacent or around the lighting means.

23. A panel assembly as claimed in Claim 22 in which the indicia, insignia or design (98) is an opaque element which is back-lit by the lighting means when the lighting means are illuminated.

24. A panel assembly as claimed in Claim 22 or Claim 23 in which the laminate (66,68) includes a pair of polymeric layers applied one over the other; one of the layers (66) being transparent and being intermediate the insignia, indicia or design (98) and the first panel (l02); and the other of the said layers (68) having a cutout area (70) corresponding generally in shape to the lighting means with the lighting means being received in the cutout area.

*Fig. 1*

*Fig. 2 A*

*Fig. 3*

*Fig. 2*

*Fig. 5*

*Fig. 4*

TRANSFORMER
12 V. D.C. TO
240 V. A.C.

12 V. D. C.

Fig. 6

Fig. 6A

Fig. 10

Fig. 16

**65** **98** **74** **60**

**67** X X

**78** **76**

**82** **80**

**Fig. 7**

**60**

**62** **64**

**98, 84**

**66, 68**

**76**

**80**

**Fig. 9**

**62** **65**

**60**

**67** **66**

**98**

**84**

**96**

**72b**

**74**

**70**

**68** **64**

**72a**

**78**

**Fig. 8**

**76** **82**

**80**

Fig. 12

Fig. 11

Fig. 13

Fig. 15

Fig. 14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 494 326 (NISSAN MOTOR CO., LTD)<br>* Claims 1,10; column 2, line 60 - column 3, line 50; figures 1,6 * | 1,3-6, 8,10 | G 09 F 13/22<br>H 05 B 33/00 //<br>B 60 Q 1/30 |
| A | FR-A-2 029 573 (UNITED KINGDOM OF GREAT BRITAIN AND NORTHERN IRELAND)<br>* Claims 3,8-10; page 6, line 21 - page 7, line 32; figures 2-5 * | 7,22 | |
| A | EP-A-0 188 881 (NIPPON SEIKI CO., LTD)<br>* Claim 1; page 6, last praragraph - page 11, paragraph 1; figures 1-2 * | 5,7,19 | |
| A | GB-A-1 019 899 (STANDARD TELEPHONES AND CABLES LTD)<br>* Claims 1-2,4; page 1, line 84 - page 2, line 27; figure 3 * | 11 | TECHNICAL FIELDS SEARCHED (Int. Cl.4)<br><br>G 09 F<br>H 05 B<br>B 60 Q |
| A | US-A-4 457 089 (W.H. PHILLIPS, Jr.)<br>* Abstract; column 5, line 67 - column 6, line 33; figures 1,3,5 * | 12 | |

The present search report has been drawn up for all claims

| Place of search | Date of completion of the search | Examiner |
|---|---|---|
| THE HAGUE | 23-07-1987 | FRANSEN L.J.L. |